# EUROPEAN PATENT APPLICATION

(11) **EP 3 692 860 A1**
(43) Date of publication of application: **12.08.2020**
(21) Application number: 19156159.6
(22) Date of filing: 08.02.2019
(51) Int. Cl.: A47F 3/04, B60B 33/06

(54) **REFRIGERATED SALES FURNITURE**

(71) Applicant: Carrier Corporation, Palm Beach Gardens, FL 33418 (US)
(72) Inventor: VINZ, Sascha, 55246 Mainz-Kostheim (DE)
(74) Representative: Schmitt-Nilson Schraud Waibel Wohlfrom Patentanwälte Partnerschaft mbB

(57) **Abstract**

Refrigerated sales furniture (10) comprises at least one foot (40) configured for supporting the refrigerated sales furniture (10) on a ground (36), wherein at least a lower portion of the at least one foot (40) is formed as a guiding section (41); and wherein the at least one foot (40) further comprises: a movable support (46) supporting at least one roller (50); at least one guiding rail (60) formed within the guiding section (41), the guiding rail (60) comprising a first leg (61) and a second leg (62) extending parallel to each other a third leg (63) connecting the first and second legs (61, 62); and a guiding pin (56) extending from or at least partly through the movable support (46) and through the at least one guiding rail (60) of the guiding section (41). The guiding pin (56) is movable with respect to the guiding section (41) along the at least one guiding rail (60) between a first defined position in which the at least one roller (50) is arranged in a retracted position in which it is completely accommodated within the guiding section (41) and a second defined position in which the at least one roller (50) is arranged in an extended position in which it protrudes, at least partially, out of the lower end of the guiding section (41).

## Description

The invention relates to refrigerated sales furniture.

Refrigerated sales furniture, for example refrigerated sales cabinets with front access or refrigerated sales chests with top access, are typically quite heavy which makes it difficult to move them from one place to another.

Accordingly, it is an object of the present invention to provide improved refrigerated sales furniture, in particular refrigerated sales cabinets and refrigerated sales chests, which may be moved around more easily.

According to exemplary embodiments of the invention, refrigerated sales furniture comprises at least one foot configured for supporting the refrigerated sales furniture on a ground. At least a lower portion of the at least one foot is formed as a guiding section. The at least one foot comprises a movable support supporting a roller, at least one guiding rail formed within the guiding section, and a guiding pin. The guiding pin extends from or at least partly through the movable support and through the at least one guiding rail of the guiding section. The guiding rail comprises a first leg and a second leg extending parallel to each other, and a third leg connecting the first and second legs with each other. The guiding pin is movable with respect to the guiding section along the at least one guiding rail between a first defined position in which the roller of the movable support is arranged in a retracted position in which it is completely accommodated within the guiding section, and a second defined position in which the roller of the movable support is arranged in an extended position in which it protrudes, at least partially, out of a lower end of the guiding section.

Exemplary embodiments of the invention further include a method of moving at least one roller of a foot of refrigerated sales furniture according to an exemplary embodiment of the invention between a retracted position and an extended position. The method includes moving the guiding pin, with respect to the guiding section, from its first defined position, in which the roller of the movable support is arranged in a retracted position in which it is completely accommodated within the guiding section, into its second defined position in which the roller of the movable support is arranged in an extended position protruding out of the lower end of the guiding section. Alternatively or additionally, the method includes moving the guiding pin, with respect to the guiding section, from the second defined position in which the roller of the movable support is arranged in the extended position into the first defined position in which the roller of the movable support is arranged in the retracted position.

Exemplary embodiments of the invention allow moving the roller easily between the extended position and the retracted position by moving the guiding pin between its first and second defined positions. When arranged in the extended position, the roller extends at least partly from the guiding section, thereby facilitating moving the refrigerated sales furniture over the ground. When arranged in the retracted position, the roller is completely accommodated within the guiding section so that the refrigerated sales furniture is supported on the ground by the guiding section. This configuration results in a firm positioning of the refrigerated sales furniture on the ground preventing an undesired movement of the refrigerated sales furniture.

According to one embodiment of the invention, the guiding section of the foot is tube-shaped and the at least one guiding rail is provided as an opening formed within a wall of the guiding section. Providing the guiding rail as an opening formed within a wall of a tube-shaped guiding section provides an easy and convenient way of providing a strong and stable guiding rail.

According to one embodiment of the invention, two guiding rails of substantially corresponding shape are formed in opposing wall portions of the guiding section. Two opposing guiding rails allow for a mechanically stable guidance of the guiding pin. Guiding the guiding pin by two opposing guiding rails in particular reduces the risk of accidentally tilting the guiding pin with respect to the guiding section.

According to one embodiment of the invention the first and second defined positions are provided as ends of the at least one guiding rail, particularly of the two guiding rails in opposing wall portions of the guiding section. Such a configuration provides a convenient way of providing first and second defined positions of the guiding pin.

According to one embodiment of the invention, an elongate opening is formed within the movable support, and the guiding pin at least partly extends through said elongate opening in a configuration allowing the guiding pin to move along the elongate opening. Such a configuration allows moving the guiding pin with respect to the movable support. It in particular allows moving the guiding pin along a well-defined path defined by the elongate opening.

According to one embodiment of the invention, the elongate opening extends horizontally through the movable support allowing the guiding pin to move horizontally with respect to the movable support.

According to one embodiment of the invention, the elongate opening has a length that corresponds to the distance between the first and second legs of the at least one guiding rail. This allows moving the guiding element along the elongate opening from the first leg to the second leg, and vice versa.

According to one embodiment of the invention, the elongate opening has a height that corresponds to the height of a corresponding portion, in particular a middle or end portion, of the guiding pin extending through the elongate opening. This allows guiding the guiding element along the elongate opening without or with only little mechanical play in the vertical direction.

According to one embodiment of the invention, the movable support has a main body, and the outer shape and/or outer dimensions of said main body correspond to the inner shape and/or inner dimensions of the guiding section. As a result, the main body is guided by the guiding portion without or with only little mechanical play. In consequence, the movable support is movable between the extended position and the retracted position without being tilted within the guiding section.

According to one embodiment of the invention, the guiding pin is movable along a contour of the at least one guiding rail, in particular along a contour of a guiding opening which is formed within the guiding section for providing the guiding rail.

According to one embodiment of the invention, the guiding rail extends in a curved shape between an upper end defining the first defined position and a lower end defining the second defined position, such that the guiding pin is movable along the curved guiding rail between the first defined position and the second defined position.

The curved guiding rail in particular may be shaped so that the guiding pin cannot move between the first and second defined positions when it is driven by gravity only.

In such a configuration, the guiding pin is locked by the shape of the guiding rail in each of the first and second defined positions, respectively. In consequence, the at least one roller is locked in the extended position and in the retracted position, preventing the roller from accidentally moving out of said positions, respectively.

According to one embodiment of the invention, the first leg and the second leg of the guiding rail extend in a substantially vertical direction and the third leg of the guiding rail extends in a substantially horizontal direction. Such a configuration allows moving the guiding pin and the support element between the retracted position and the extended position in the vertical direction along at least one of the first and second legs, and transferring the guiding pin between the first and second legs by moving the guiding pin horizontally along the third leg.

According to one embodiment of the invention, the first leg has an upper end defining the first defined position and the second leg has an upper end defining the second defined position. Further, the upper end of the first leg is located at higher position than the upper end of the second leg. In consequence, the movable support is arranged in the retracted position, when the guiding pin is in the first defined position, and the movable support is arranged in the extended position, when the guiding pin is arranged in the second defined position.

According to one embodiment of the invention, the refrigerated sales furniture further comprises an elastic element, in particular a tension spring, more particularly a helical tension spring, which is configured for contracting for holding the movable support in the retracted position and/or moving the movable support into the retracted position.

According to one embodiment of the invention, the elastic element extends between a fixing portion provided at the upper end of the movable support and a fixing portion provided at the guiding section. The elastic element in particular may be mounted to a bar extending transversely through the guiding section for providing a fixing portion at the guiding section.

According to one embodiment of the invention, the guiding pin is part of a clamping mechanism, which is configured for clamping the movable support with respect to the guiding section in the first and second defined positions, respectively. Such a clamping mechanism allows preventing the guiding pin from moving accidentally out of the first and second defined positions, respectively.

According to one embodiment of the invention, the clamping mechanism comprises the guiding pin having an outer thread and extending through both guiding rails of the guiding section and through the elongate opening of the movable support, a rotatable hand wheel comprising an inner thread engaging with the outer thread of the guiding pin; and a broadened counterpart arranged an end of the guiding pin opposite to the rotatable hand wheel.

By rotating the rotatable hand wheel, portions of the guiding section may be squeezed between the hand wheel and the movable support and between the movable support and the broadened counterpart, respectively. Said squeezing fixes the guiding pin at its current position with respect to the guiding section. Such a configuration allows fixing the guiding pin, in particular when it is arranged in one of its first and second defined positions. In consequence, the movable support and the at least one roller may be fixed in the retracted and extended positions, respectively.

According to one embodiment of the invention, the method of moving at least one roller of a foot of refrigerated sales furniture includes lifting the foot of the refrigerated sales furniture, e.g. by tilting the refrigerated sales furniture, before moving the movable support for removing the weight of the refrigerated sales furniture from the foot. Removing the weight of the refrigerated sales furniture from the foot facilitates the movement of the at least one roller between its retracted and extended positions.

According to one embodiment of the invention, the method of moving at least one roller of a foot of refrigerated sales furniture includes supporting or effecting the movement of the guiding pin and the movable support from the second into the first defined position by an elastic element, such as a spring, in particular a (spiral) tension spring, for facilitating the movement of the at least one roller from its extended position into its retracted position.

According to one embodiment of the invention, the method of moving at least one roller of a foot of refrigerated sales furniture includes loosening the clamping mechanism before moving the guiding pin; and tightening the clamping mechanism after the guiding pin has reached the second or first defined position. Tightening the clamping mechanism after the guiding pin has reached the first or second defined position prevents accidentally moving the guiding pin out of the first and second defined positions, respectively.

In the following, refrigerated sales furniture according to an exemplary embodiment of the invention is described with reference to the enclosed figures.
Figure 1 shows a schematic sectional view of refrigerated sales furniture according to an exemplary embodiment of the invention.
Figures 2 and 3 depict different side views of a foot of the refrigerated sales furniture according to an exemplary embodiment of the invention with the roller being arranged in a retracted position.
Figure 4 depicts a sectional view along line A-A shown in Figure 3.
Figure 5 depicts a side view of a foot of the refrigerated sales furniture according to an exemplary embodiment of the invention with the roller being arranged in an extended position.
Figure 6 depicts a perspective view of the internal structure of the foot shown in Figures 2 to 5.
Figure 7 depicts an exemplary shape of a guiding opening formed in a guiding element according to an exemplary embodiment of the invention.
Figure 8 depicts an enlarged view of area "B" marked in Figure 7.

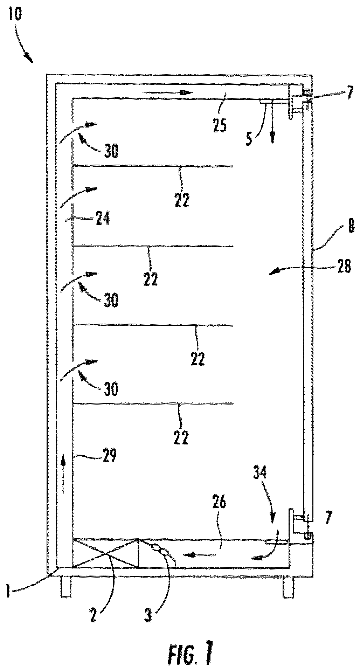

Figure 1 depicts a schematic sectional view of an example of refrigerated sales furniture 10, in particular a refrigerated sales cabinet. Although a refrigerated sales cabinet is depicted in Figure 1, exemplary embodiments of the invention also may be employed in other types of refrigerated sales furniture 10, for example in refrigerated chests.

The refrigerated sales furniture 10 comprises a furniture body 1 defining a refrigerated sales space 28 which is configured for storing products (not shown) to be presented therein. A plurality of shelves or racks 22, which are configured for accommodating and supporting said products, are provided on top of each other within the refrigerated sales space 28.

An evaporator 2, which is part of a refrigeration circuit, is provided at the bottom of the refrigerated sales furniture 10 below the refrigerated sales space 28. Additional components of the refrigeration circuit, such as a compressor, a condenser and an expansion device, which are not shown in Figure 1, may be provided within the refrigerated sales furniture 10 as well. Alternatively, one or more of these components may be located outside the refrigerated sales furniture 10, for example in a machine room or on the outside/on the roof of the building (not shown), which houses the refrigerated sales furniture 10.

An access area 11 provided at the front side of the refrigerated sales space 28 is closed by means of a door 8, in particular a glass door, which is pivotably supported by upper and lower hinges 7. In alternative embodiments, which are not shown in the figures, the refrigerated sales furniture 10 may be equipped with two or more doors 8 including sliding doors mounted on ball bearings rolling on rails.

A return air duct 26 is formed on an inlet side of the evaporator 2, which is the right side of the evaporator 2 in the exemplary configuration shown in Figure 1. The return air duct 26 houses a fan 3, which is configured for sucking air from the refrigerated sales space 28 through a return air opening 34 provided at the bottom of the refrigerated sales space 28 into the return air duct 26 and delivering said air to the evaporator 2, where it is cooled.

Cooled air leaving the evaporator 2 (on its left side in the exemplary configuration shown in Figure 1) is delivered into a vertical cold air duct 24 extending vertically along the back side 29 of the refrigerated sales space 28.

The vertical cold air duct 24 may be provided with some cold air openings 30 for delivering cold air from the vertical cold air duct 24 into the refrigerated sales space 28.

A horizontal cold air duct 25 is fluidly connected with the upper end of the vertical cold air duct 24 for delivering cold air from the vertical cold air duct 24 to the front side of the refrigerated sales space 28. A front side end of the horizontal cold air duct 25 is provided with an air discharge opening 5 for discharging cold air from the horizontal cold air duct 25 into an upper front area of the refrigerated sales space 28.

A plurality of feet 40 supporting the refrigerated sales furniture 10 on the ground 36 are provided at the bottom of the furniture body 1. The feet 40 may be formed integrally with the furniture body 1. Alternatively, the feet 40 may be mounted to the furniture body 1, e.g. by screws, bolts or similar fixing elements. Such fixing elements, which are known to the skilled person, are not shown in Figure 1.

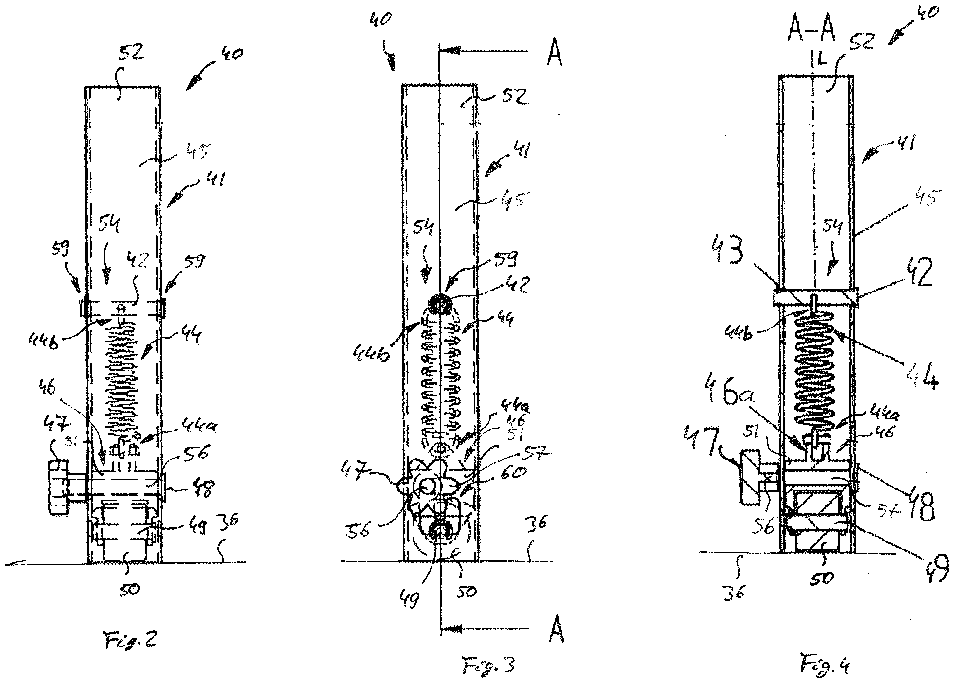

Figures 2 and 3 depict two different side views of a foot 40 of refrigerated sales furniture 10 according to an exemplary embodiment of the invention. Figure 4 depicts a sectional view along line A-A shown in Figure 3.

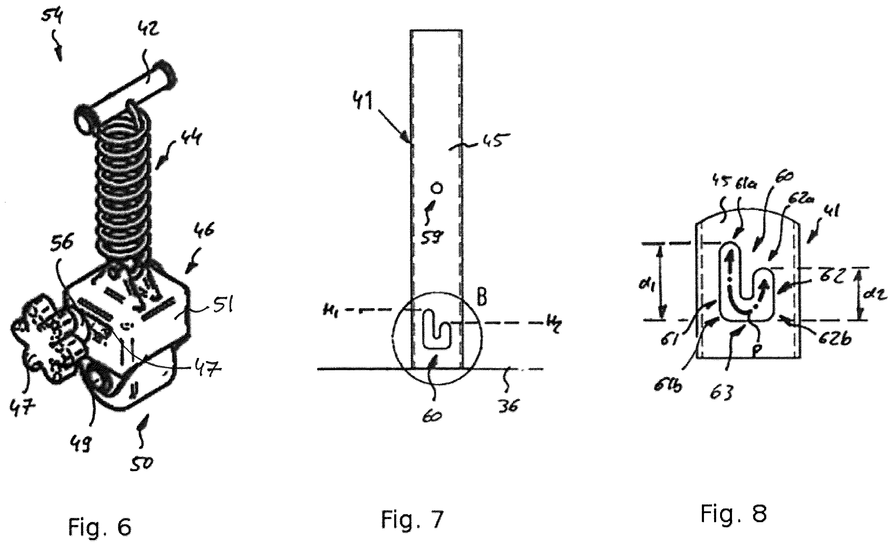

A lower portion of the foot 40 is formed as a guiding section 41. In Figures 2 and 3, the guiding section 41 is depicted transparently in order to allow showing the internal structure 54 of the foot 40. A perspective view of said internal structure 54 (without the guiding section 41) is depicted in Figure 6. The internal structure 54 will be discussed in more detail further below.

The guiding section 41 is at least partly hollow providing a cavity 52. The guiding section 41 in particular may be a tube extending in a longitudinal direction, which is the vertical direction in the orientation of the figures. The guiding section 41 may have a circular or a rectangular cross section. The guiding section 41 in particular may have a quadratic cross section.

The internal structure 54 arranged within the cavity 52 comprises a movable support 46 having a main body 51. The movable support 46 is arranged within the cavity 52 in a configuration which allows the movable support 46 to move along the longitudinal direction.

The outer shape and/or outer dimensions of the main body 51 of the movable support 46 correspond to the inner shape and/or inner dimensions of the guiding section 41, such that the main body 51 is movable within the guiding section 41 without being tilted.

The internal structure 54 further comprises a roller 50, which is rollably supported by an axle 49 mounted to the movable support 46. In alternative configurations, which are not explicitly shown in the figures, a plurality of rollers 50 may be arranged coaxially next to each other on a common axle 49 or on a plurality of axles 49 extending coaxially with each other.

The movable support 46 in particular is movable in the longitudinal direction with respect to the guiding section 41 moving the roller 50 between a retracted position and an extended position. When the roller 50 is arranged in the retracted position, as it is illustrated in Figures 2 to 4, the roller 50 is completely accommodated within the cavity 52. In consequence, a lower end of the guiding section 41 touches the ground 36, firmly supporting the refrigerated sales furniture 2 on the ground 36.

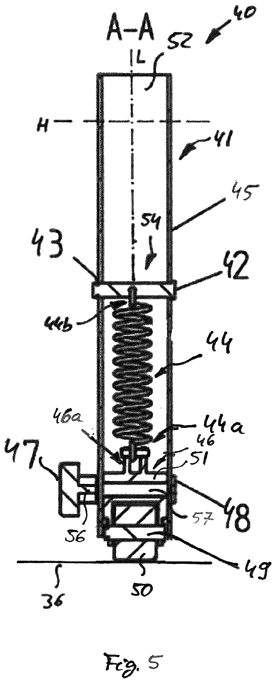

Figure 5 depicts a sectional view taken along the same plane as the sectional view depicted in Figure 4. In the configuration depicted in Figure 5, the roller 50 is arranged in the extended position. When the roller 50 is arranged in the extended position, the roller 50 protrudes at least partially from the lower end of guiding section 41.

In consequence, only the roller 50, but not the guiding section 41, contacts the ground 36 below the refrigerated sales furniture 10. As a result, the refrigerated sales furniture 10 may be moved easily across the ground 36 by rolling the roller 50 along the ground 36.

The movable support 46 is elastically supported by an elastic element 44, such as a spring 44. A fixing portion 46a of the movable support 46 in particular is mechanically connected to a first (lower) end 44a of the elastic element 44, and the opposing second (upper) end of the elastic element 44b is mounted to a bar 42 extending through the guiding section 41 transversely, in particular orthogonally, to the longitudinal direction. The bar 42 extends through fixing openings 59 formed in an outer wall 45 of the guiding section 41. The bar 42 may be secured within said fixing openings 59 using a safety splint 43 extending through the bar 42 (see Figures 4 and 5).

The elastic element 44 is configured to act as a tension spring, i.e. the elastic element 44 is configured for contracting, thereby providing an elastic force which pulls the movable support 46 and the roller 50 towards bar 42 into the retracted position in which the roller 50 is completely accommodated within the cavity 52, as depicted in Figures 2 to 4.

The internal structure 54 further comprises a guiding pin 56 extending through two guiding rails 60. The guiding rails 60 are provided as guiding openings formed opposite to each other within the outer wall 45 of the guiding section 41.

In a configuration in which the guiding section 41 has a rectangular cross-section, as exemplarily depicted in Figure 6, the guiding pin 56 is configured to be linearly movable with respect to the support member 46, in particular orthogonally to the longitudinal direction.

For allowing the guiding pin 56 to move linearly with respect to the support member 46, the guiding pin 56 extends at least partially into an elongate opening 57 formed within the movable support 46. The elongate opening 57 extends orthogonally to the longitudinal direction, in particular horizontally.

An exemplary shape of a guiding rail 60 according to an exemplary embodiment of the invention is depicted in Figure 7. Figure 8 depicts an enlarged view of area "B" marked in Figure 7. A corresponding guiding rail 60, which is not visible in Figures 7 and 8, is formed within the outer wall 45 of the guiding section 41 on an opposing rear side of the guiding section 41 for allowing the guiding pin 56 to extend through (cf. Figures 2, 4 and 5).

The shape of the guiding rails 60 allows the guiding pin 56, to move along a predetermined path P (see Figure 8) between a first defined position in which the roller 50 of the movable support 46 is completely accommodated within the guiding section 41 (retracted position) and a second defined position in which the roller 50 of the movable support 46 is protrudes, at least partially, out of the lower end of the guiding section 41 (extended position).

Each guiding rail 60 comprises a first leg 61 and a second leg 62 extending parallel to each other in the longitudinal direction (i.e. in the vertical direction in the exemplary configuration depicted in the figures).

Each guiding rail 60 further comprises a third leg 63 extending between and connecting the first and second legs 61, 62 with each other. In the exemplary embodiment depicted in the figures, the third leg 63 extends orthogonally to the extension of the first and second legs 61, 62 in the horizontal direction. The third leg 63 in particular extends parallel to the elongate opening 57 formed within the movable support 46.

As the guiding pin 56 always extends through one of the legs 61, 62, 63, its movement is delimited by the legs 61, 62, 63. The movement of the guiding pin 56 in the longitudinal (vertical) direction towards the bar 42 in particular is restricted by the upper ends 61a, 62a of the first and second legs 61, 62, respectively.

The length d₁ of the first leg 61 in the longitudinal (vertical) direction is larger than the length d₂ of the second leg 62 in the longitudinal (vertical) direction (see Figure 8). In consequence, the upper end 61a of the first leg 61 is arranged at a larger height H₁ with respect to the ground 36 than the upper end 62a of the second leg 62, which is arranged at a smaller height H₂ (see Figure 7).

When the guiding pin 56 extends through the first leg 61, movement of the guiding pin 56 and in consequence movement of the movable support 46 in the longitudinal direction is delimited by the longitudinal extension of the first leg 61. In particular, the movable support 46 may be moved upwards until the guiding pin 56 reaches the upper end 61a of the first leg 61. As a result, the roller 50 is arranged in the retracted position depicted in Figures 2 to 4, in which the roller 50 is completely accommodated within the cavity 52 and the lower end of the guiding section 41 rests on the ground 36.

When the guiding pin 56 of the movable support 46 extends through the second leg 62, movement of the guiding pin 56 and in consequence of the movable support 46 in the longitudinal direction is delimited by the extension of the second leg 62. The guiding pin 56 in particular is allowed to move upwards towards the bar 42 only until the guiding pin 56 reaches the upper end 62a of the second leg 62. As the upper end 62a of the second leg 62 is arranged at a smaller height H₂ above the ground 36 than the upper end 61a of the first leg 61 (cf. Figure 7), the roller 50 is arranged in an extended position, i.e. in a position in which the roller 50 at least partly protrudes from the lower end of the guiding section 41 (see Figure 5), when the guiding pin 56 is arranged in the second defined position extending through the second leg 62.

When the roller 50 is arranged in the extended position, only the roller 50, but not the guiding section 41, contacts the ground 36 (cf. Figure 5). As a result, the refrigerated sales furniture 10 may be moved easily over the ground 36 by rolling the roller 50 over the ground 36.

For moving the guiding pin 56 from the first defined position extending through the first leg 61 to the second defined position, the guiding pin 56 is moved together the movable support 46 downwards along the first leg 61 until the guiding pin 56 reaches the longitudinal position (height) of the third leg 63 connecting a lower end 61b of the first leg 61 with a lower end 62b of the second leg 62.

Next, the guiding pin 56 is shifted in a linear motion horizontally along the third leg 63 and the elongate opening 57 formed within the support member 46 from the lower end 61b of first leg 61 into the lower end 62b of the second leg 62 (cf. Figure 8).

After the guiding pin 56 has reached the lower end 62b of the second leg 62, the guiding pin 56 is moved together with the movable support 46 upwards along the second leg 62 until the guiding pin 56 reaches the upper end 62a of the second leg 62 (second defined position). This upward movement of the movable support 46 is supported by the elastic force provided by the elastic element 44.

The guiding pin 56 may be moved in a similar, but reverse, motion from the second defined position at the upper end 62a of the second leg 62 to the first defined position at the upper end 61a of the first leg 61 for moving the movable support 46 together with the roller 50 from the extended position back into the retracted position.

As the guiding pin 56 needs to move successively downwards, horizontally and upwards for moving between the first and second defined positions, the guiding pin 56 is not able to move between the first and second defined positions driven by gravity only. As a result, an accidental movement of the guiding pin 56 between the first and second defined positions is reliably prevented.

Due to the geometrical shape of the opening 60, the guiding pin 56 may be moved horizontally between the first and second legs 61, 62 only when the movable support 46 is arranged in a position in which the guiding pin 56 extends through the third leg 63 of the guiding rail 60.

In an alternative embodiment, the guiding section 41 has a circular cross-section, and the main body 51 of movable support 46 has a circular cross section as well. Such a configuration allows the main body 51 of the movable support 46 to rotate around a longitudinal axis L extending in the longitudinal direction (see Figures 4 and 5).

When the guiding section 41 has a circular cross-section, the third leg 63 extends in a curved shape along the cylindrical outer wall 45 of the guiding section 41.

In such a configuration, in which the guiding section 41 and the main body 51 of the movable support 46 have circular cross-sections, the guiding pin 56 may be movable with respect to the movable support 46 along an elongate opening 57 formed within the movable support 46, as it has been described before with respect to a rectangular cross-section.

Alternatively, in case of a circular cross-section, the guiding pin 56 may be fixed to or formed integrally with the movable support 46 such that the guiding pin 56 extends radially from the outer periphery of the main body 51 of the movable support 46.

In such a configuration, the main body 51 of the movable support 46 is rotated around the longitudinal axis L when the guiding pin 56 is moved along the third leg 63 of the guiding rails 60. The rotation of the main body 51 of the movable support 46 results in a torsion of the elastic element 44, which is accommodated by the elastic element 44.

Except for the replacement of the linear sliding motion of the guiding pin 56 along the third leg 63 by a rotation the main body 51 of the movable support 46 around the longitudinal axis L, the movements of the movable support 46 and the roller 50 between the retracted position and the extended position and vice versa correspond to the movements described before for the configuration in which the guiding section 41 has a rectangular cross section.

In configurations having a rectangular cross-section as well as in configurations having a circular cross-section, a hand wheel 47 may be provided at a first end of the guiding pin 56 outside the guiding section 41, as it is depicted in Figures 2 to 6.

An opposing second end of the guiding pin 56 is secured by a safety splint or a broadened counterpart 48, which is configured for preventing the guiding pin 56 from being pulled out or dropping out of the guiding section 41.

Providing a hand wheel 47 at the guiding pin 56 facilitates gripping the guiding pin 56 and moving it along the legs 61, 62, 63 of the guiding rails 60. This allows moving the guiding pin 56 and the movable support 46 more conveniently between the first and second defined positions.

The guiding pin 56 and the hand wheel 47 may be provided with corresponding threads which allow screwing the hand wheel 47 onto the guiding pin 56. By screwing the hand wheel 47 onto the guiding pin 56, a portion of the outer wall 45 of the guiding section 41 may be clamped between the hand wheel 47 and the movable support 46 as well as between the movable support 46 and the broadened counterpart 48, respectively. Such a configuration constitutes a clamping mechanism 58, which allows fixing and securing the guiding pin 56 when arranged in the first and second defined positions, respectively.

In an alternative embodiment, which is not explicitly depicted in the figures, the elastic element 44 may be omitted. In such an embodiment, the guiding pin 56 is fixed in the first and second defined positions, respectively, by tightening an appropriate clamping mechanism 58, for example a hand wheel 47, which is threadingly engaged with the guiding pin 56, as it has been described before.

In order to facilitate the movement of the movable support 46 and the roller 50, the refrigerated sales furniture 10 may be (slightly) tilted for lifting the respective foot 40 from the ground 36 and removing any weight from the respective roller 50 before moving the movable support 46.

While the invention has been described with reference to exemplary embodiments, it will be understood by those skilled in the art that various changes may be made and equivalents may be substituted for elements thereof without departing from the scope of the invention. In addition many modifications may be made to adopt a particular situation or material to the teachings of the invention without departing from the essential scope thereof. Therefore, it is intended that the invention not be limited to the particular embodiment disclosed, but that the invention include all embodiments falling within the scope of the claims.

### References

- 1: furniture body
- 2: evaporator
- 3: fan
- 4: return air grille
- 5: air discharge opening
- 6a: upper portion of the door support frame
- 6b: lower portion of the door support frame
- 7: door hinge
- 8: door
- 9: sealing element
- 10: refrigerated sales furniture
- 11: access area
- 12: stopper bar
- 13: elastic buffer
- 22: shelve
- 24: vertical cold air duct
- 25: horizontal cold air duct
- 26: return air duct
- 28: refrigerated sales space
- 29: back side of the refrigerates sales space
- 30: cold air openings
- 34: return air opening
- 36: ground
- 40: foot
- 41: guiding section
- 42: fixing portion / bar
- 43: safety splint
- 44: elastic element / spring
- 44a: first end of the elastic element
- 44b: second end of the elastic element
- 45: outer wall
- 46: movable support
- 46a: fixing portion
- 47: hand wheel
- 48: counterpart
- 49: axle
- 50: roller
- 51: main body
- 52: cavity
- 54: internal structure
- 56: guiding pin
- 57: elongate opening
- 58: clamping mechanism
- 59: fixing opening
- 60: guiding rail
- 61: first leg
- 61a: upper end of the first leg
- 61b: lower end of the first leg
- 62: second leg
- 62a: upper end of the second leg
- 62b: lower end of the second leg
- 63: third leg

## Claims

1. Refrigerated sales furniture (10) comprising at least one foot (40) configured for supporting the refrigerated sales furniture (10) on a ground (36);
wherein at least a lower portion of the at least one foot (40) is formed as a guiding section (41); and
wherein the at least one foot (40) further comprises
a movable support (46) supporting at least one roller (50);
at least one guiding rail (60) formed within the guiding section (41), the guiding rail (60) comprising a first leg (61) and a second leg (62) extending parallel to each other a third leg (63) connecting the first and second legs (61, 62); and
a guiding pin (56) extending from or at least partly through the movable support (46) and through the at least one guiding rail (60) of the guiding section (41)
wherein the guiding pin (56) is movable with respect to the guiding section (41) along the at least one guiding rail (60) between a first defined position in which the at least one roller (50) is arranged in a retracted position in which it is completely accommodated within the guiding section (41) and a second defined position in which the at least one roller (50) is arranged in an extended position in which it protrudes, at least partially, out of the lower end of the guiding section (41).

2. Refrigerated sales furniture (10) according to claim 1,
wherein the guiding section (41) is tube-shaped and the at least one guiding rail (60) is formed within a wall of the guiding section (41), particularly two guiding rails (60) of substantially corresponding shape are formed in opposing wall portions of the guiding section (41).

3. Refrigerated sales furniture (10) according to claim 1 or 2,
wherein the first and second defined positions between which the guiding pin (56) is movable are formed as ends (61a, 62a) of the at least one guiding rail (60), particularly of the two guiding rails (60) in opposing wall portions of the guiding section (41).

4. Refrigerated sales furniture (10) according to any of the preceding claims, further comprising an elongate opening (57) extending through the movable support (46), wherein the guiding pin (56) at least partly extends through said elongate opening (57) in a configuration allowing the guiding pin (56) to move along the elongate opening (57).

5. Refrigerated sales furniture (10) according claim 4,
wherein the elongate opening (57) extends horizontally through the movable support (46); and/or
wherein the elongate opening (57) has a length that corresponds to the distance between the first and second legs (61, 62) of the at least one guiding rail (60); and/or
wherein the elongate opening (57) has a height that corresponds to the height of a portion of the guiding pin (56) extending through the elongate opening.

6. Refrigerated sales furniture (10) according to any of the preceding claims,
wherein the movable support (46) has a main body (51) the outer shape and/or outer dimensions of which correspond to the inner shape and/or inner dimensions of the guiding section (41), such that the movable support (46) is movable between the extended position and the retracted position without tilting.

7. Refrigerated sales furniture (10) according to any of the preceding claims,
wherein the guiding pin (56) is movable along a contour of the at least one guiding rail (60).

8. Refrigerated sales furniture (10) according to any of the preceding claims,
wherein the guiding rail (60) extends in a curved shape between an upper end defining the first defined position and a lower end defining the second defined position, such that the guiding pin (56) is movable along the curved guiding rail (60) between the first defined position and the second defined position.

9. Refrigerated sales furniture (10) according to claim 8, wherein the guiding rail (60) is shaped so that the guiding pin (56) cannot move between the first and second defined positions when driven by gravity only.

10. Refrigerated sales furniture (10) according to any of the preceding claims, wherein the first leg (61) and the second leg (62) of the guiding rail (60) extend in a substantially vertical direction and the third leg (63) of the guiding rail (60) extends in a substantially horizontal direction.

11. Refrigerated sales furniture (10) according to claim 10,
wherein the first leg (61) has an upper end defining the first defined position and the second leg (62) has an upper end defining the second defined position, wherein the upper end of the first leg (61) is at higher position than the upper end of the second leg (62).

12. Refrigerated sales furniture (10) according to any of the preceding claims, further comprising an elastic element (44), particularly a tension spring, more particularly a helical tension spring, which is configured for holding the movable support (46) in the retracted position and/or for moving the movable support (46) into the retracted position; and/or
wherein the elastic element (44) extends between a fixing portion (46a) at the upper end of the movable support (46) and a fixing portion (42) at the guiding section (41), particularly at a bar (42) extending transversely through the guiding section (41).

13. Refrigerated sales furniture (10) according to any of the preceding claims,
wherein the guiding pin (46) is part of a clamping mechanism (58) which is configured for clamping the movable support (46) with respect to the guiding section (41) in the first and second defined positions; and/or
wherein the clamping mechanism (58) comprises
the guiding pin extending through both guiding rails (60) of the guiding section (41) and through the elongate opening of the movable support (46), the pin having an outer thread;
a rotatable hand wheel (47) comprising an inner thread engaging with the outer thread of the pin; and
a broadened counterpart arranged an end of the guiding pin (46) opposite to the rotatable hand wheel (47);
such that by rotating the rotatable hand wheel (47) the rotatable hand wheel (47) can be clamped against the outer surface of the guiding section (41).

14. Method of moving at least one roller (50) of a foot (40) of refrigerated sales furniture (10) according to any of the preceding claims between an extended position and a retracted position, wherein the method includes moving the guiding pin (56), with respect to the guiding section (41), from the first defined position in which the at least one roller (50) of the movable support (46) is arranged in a retracted position, in which it is completely accommodated within the guiding section (41), into the second defined position, in which the at least one roller (50) of the movable support (46) is arranged in an extended position protruding out of the lower end of the guiding section (41), and/or
moving the guiding pin (56), with respect to the guiding section (41), from the second defined position, in which the at least one roller (50) of the movable support (46) is arranged in an extended position protruding out of the lower end of the guiding section (41), into the first defined position, in which the at least one roller (50) of the movable support (46) is arranged in a retracted position in which it is completely accommodated within the guiding section (41).

15. Method according to claim 14,
further comprising at least one of the following steps:
lifting the foot (40) of the refrigerated sales furniture (10) before moving the movable support (46)
supporting or effecting the movement of the guiding pin (56) and the movable support (46) from the second into the first defined position by an elastic element (44);
loosening the clamping mechanism (58) before moving the guiding pin (56) out of the first or second defined position; and
tightening the clamping mechanism (58) after the guiding pin (56) has reached the second or first defined position.
